# FASCICULE DE BREVET EUROPEEN

(11) **EP 2 019 352 B1**
(45) Date de publication et mention de la délivrance du brevet: **09.06.2010**
(21) Numéro de dépôt: 08160615.4
(22) Date de dépôt: 17.07.2008
(51) Int. Cl.: G06F 1/16, G09F 27/00, A45C 13/00

(54) **Système interactif de visualisation d'informations**
Interaktives Datenanzeigesystem
Interactive system for viewing information

(30) Priorité: 17.07.2007 FR 0756548
(43) Date de publication de la demande: 28.01.2009
(73) Titulaire: Technomobile, 93600 Aulnay-Sous-Bois (FR)
(72) Inventeur: Bessad, Salem, 93290 Tremblay en France (FR)
(74) Mandataire: Kohn, Philippe

(56) Documents cités:
- US-A1- 2002 134 697
- US-A1- 2007 159 781
- US-B1- 6 438 577

## Description

La présente invention concerne un système interactif de visualisation d'informations. Notamment, le système interactif de visualisation d'informations de l'invention est un système portatif destiné à de la communication professionnelle.

Dans un premier état de la technique, il est connu d'utiliser un ordinateur portable connecté par exemple par une liaison filaire ou par une liaison radio fréquence à un réseau de communication téléinformatique pour permettre à un agent commercial de se rendre sur le lieu d'une manifestation commerciale ou chez un client tout en lui permettant de présenter et de visualiser les informations nécessaires à sa communication commerciale. Par ailleurs, dans ce premier état de la technique, il est connu de mettre en place une vitrine électronique qui permet un certain degré d'interactivité entre un visiteur et le contenu affiché sur au moins un écran de visualisation et qui comporte par exemple une partie apparente sur la vitrine et qui permet de saisir une ou plusieurs commandes qui interagissent avec le contenu d'information affichée sur l'écran de visualisation.

Dans un second état de la technique, il est aussi connu des dispositions non électroniques, qui permettent à un utilisateur de prélever une brochure ou un cadre qui porte de manière imprimée ou autrement des informations. L'utilisateur prélève la brochure ou cadre d'un support arbitraire et peut alors se déplacer en utilisant selon ses besoins la brochure ou cadre qui lui fournit des informations en relation avec son parcours. L'utilisateur peut se déplacer par exemple dans un musée, dans un hall d'exposition ou dans une galerie et recevoir ainsi des informations sur les produits ou services exposés et décrits dans la brochure ou cadre. Par ailleurs, dans ce second état de la technique, il est connu de mettre en place une vitrine dans laquelle sont disposées en plusieurs colonnes des affichettes sur lesquelles sont imprimées des photos et des indications commerciales concernant des biens ou des services distribués par la boutique associée à la vitrine. C'est particulièrement le cas des agences d'intérim ou de travail temporaire à la vitrine desquelles sont présenté les postes proposées par l'agence. C'est aussi le cas des agences immobilières qui proposent à la vente ou à la location des biens immobiliers, qui sont chacun décrit sur l'une des affichettes disposées sur la vitrine de l'agence.

Dans le premier état de la technique, les informations disponibles sur l'ordinateur portable peuvent facilement être mises à jour, par exemple à partir d'un poste central, en effectuant un rechargement d'une base de données connectée par le réseau de communication téléinformatique à l'ordinateur portable. Il est aussi possible de bénéficier des possibilités d'interaction entre l'utilisateur de l'ordinateur portable et une ou plusieurs applications de visualisation de données. Par exemple, il est bien connu d'utiliser un logiciel de diffusion de diaporamas, comme par exemple le logiciel PowerPoint (TM) de Microsoft.

Cependant, l'ordinateur portable doit être utilisé par un spécialiste et un tel état de la technique qui apporte la flexibilité des dispositifs interactifs de l'informatique n'est pas adaptable à la situation du second état de la technique, indiqué plus haut, des brochures mises à la disposition de simples visiteurs d'une exposition, d'un magasin ou d'une galerie.

La présente invention apporte remède à ces inconvénients de l'état de la technique. En effet, elle concerne un système interactif de visualisation d'informations du genre comportant :
-- un ordinateur embarqué doté de ressources de connexion à un réseau local et de ressources de connexion à un réseau externe;
-- une valise permettant de renfermer de manière sûre avant son montage l'ensemble des composants du système interactif.

Le système interactif de visualisation d'informations selon l'invention comporte :
-- une pluralité de cadres interactifs de support d'informations, chacun d'eux étant doté d'au moins une ressource de connexion au réseau local instauré à l'aide de l'ordinateur embarqué ;
-- une structure mécanique de montage et de support destinée à supporter et à disposer la pluralité de cadres interactifs une fois montée ; et
-- ladite valise comportant un moyen de support physique à ladite structure mécanique une fois montée ;
-- ladite structure mécanique comportant une pluralité de tubes pour constituer par emboîtage ou de manière télescopique des colonnes de support (5) ; et
-- chaque cadre interactif de ladite pluralité de cadres interactifs étant équipé de moyens d'accrochage et de décrochage aux dites colonnes de support.

Le système de l'invention peut ainsi servir aussi bien à équiper la vitrine d'une boutique que la section d'entrée d'un hall d'exposition. Dans le cas d'une vitrine de boutique, les cadres interactifs peuvent rester à demeure sur la structure mécanique de montage et de support. Dans le cas de la section d'entrée d'un hall d'exposition, chaque visiteur peut détacher un cadre interactif de son support pour s'en servir de manière active lors de sa visite dans le hall d'exposition.

Dans une troisième application, le système de l'invention peut aussi être utilisé lors d'une réunion, chaque participant recevant un cadre interactif et le meneur de la réunion pouvant proposer en fonction de l'évolution de celle-ci et des interactions de chaque participant, un contenu adapté.

Selon un mode de réalisation de l'invention, la valise comporte :
-- des rangements ou calages pour enfermer de manière sûre ladite pluralité de cadres interactifs, et un ordinateur embarqué ainsi que
-- des logements à titre de moyen de support physique à ladite structure mécanique une fois montée pour recevoir et maintenir rigidement les dits tubes lorsqu'ils sont associés en colonnes de support sur ladite valise.

Selon un mode de réalisation de l'invention, au moins une colonne de support est terminée à son extrémité opposée à l'extrémité engagée dans les logements de support de la valise par une entretoise pour assurer sa rigidité mécanique.

Selon un mode de réalisation de l'invention, le système comporte une connexion de type téléinformatique à un serveur de bases de données distant.

Selon un mode de réalisation de l'invention, le système comporte un concentrateur WiFi ou du même genre associé à au moins un ordinateur embarqué associé à une valise, et en ce que chaque cadre interactif comporte une ressource de connexion WiFi ou du même genre pour échanger des données et/ou des commandes avec une application centrale exécutée sur ledit ordinateur embarqué et/ou sur le site serveur de bases de données distant.

Selon un mode de réalisation de l'invention, chaque support comporte des moyens de connexion d'alimentation électrique des cadres interactifs connectés à une source d'alimentation électrique, notamment pour recharger des batteries électrochimiques des cadres interactifs, et/ou des moyens de connexion électrique de signaux numériques provenant d'un réseau local filaire implémenté avec ledit ordinateur embarqué de manière à charger des présentations et/ou des applications de documents multimédias sur chaque cadre interactif connecté audit support.

Selon un mode de réalisation de l'invention, chaque cadre interactif comporte un afficheur qui coopère avec des moyens de saisie de données et/ou de commande comme un écran tactile, interprétées dans l'exécution d'au moins une présentation et/ou application de documents multimédias.

Selon un mode de réalisation de l'invention, le système comporte un moyen pour générer une imagette contenant des données et/ou des codes exécutables, l'imagette étant affichée sur au moins un cadre interactif, un moyen pour télécharger une application de capture de ladite imagette par un téléphone mobile ou un assistant personnel de données de manière à utiliser des données et/ou des codes compilés par ladite application de gestion documentaire exécutée sur ledit cadre interactif en fonction des interactions de l'utilisateur.

Selon un mode de réalisation de l'invention, le système comporte sur au moins un cadre interactif une ressource pour retourner des données et /ou des commandes issues de l'exécution d'une application de gestion documentaire exécutée sur ledit cadre interactif en fonction des interactions de l'utilisateur par une connexion comme une connexion BlueTooth avec un module d'exécution de l'application de gestion documentaire exécutée sur l'ordinateur embarqué.

Selon un mode de réalisation de l'invention, le système est associé avec un réseau de lecteurs de codes d'identification de cadres interactifs, chaque lecteur de codes d'identification étant associé à la reconnaissance d'une zone d'identification, et le système comporte un moyen pour réaliser le traçage des activités de l'utilisateur d'un cadre interactif porteur d'un code d'identification reconnaissable par lesdits lecteurs de codes d'identification, et un moyen pour détecter le moment où le cadre interactif sort des zones d'identification permises qui coopère avec un moyen d'alarme activé lorsque aucun lecteur d'étiquette RF-ID ne détecte le code d'identification d'un cadre interactif donné.

Selon un mode de réalisation de l'invention, le système comporte un moyen générateur de fichiers de traces des utilisations de chaque cadre interactif pour collecter lors des diverses interactions entre le cadre interactif et l'utilisateur les différentes opérations ou commandes exécutées par ledit utilisateur en relation avec la localisation dans la zone d'identification dans laquelle se trouve l'utilisateur.

Selon un mode de réalisation de l'invention, le système comporte un moyen générateur d'alarmes pour indiquer une situation dans laquelle l'utilisateur du cadre interactif sort d'une zone d'identification permise.

Selon un mode de réalisation de l'invention, les moyens d'identification sont de type RF-ID.

Selon un mode de réalisation de l'invention, le système comporte une pluralité de clients, un réseau téléinformatique de type WAN comme un réseau Internet, au moins un site Internet de présentation d'un ensemble de ressources permettant de gérer au moins une application centrale ou bien exécutée directement sur l'ordinateur embarqué dans le système interactif de visualisation d'information du client ou bien exécutée à distance sur le serveur du site pour le compte du client.

Selon un mode de réalisation de l'invention, le système coopère avec un administrateur qui maintient une pluralité de ressources permettant de gérer ladite application centrale et comportant:
-- une application de gestion des contenus multimédias associés au client ; et/ou
-- d'une application d'édition et de consultation d'un catalogue électronique ; et/ou
-- d'une application de gestion de campagnes ; et/ou
-- d'une application de gestion de la maintenance des divers systèmes interactifs de visualisation d'informations associées au client.

Selon un mode de réalisation de l'invention, le site de connexion comporte une interface de reconnaissance des différents clients abonnés au site central serveur d'applications qui comporte un moyen de saisie, d'envoi et de reconnaissance d'un code utilisateur et d'un mot de passe, et un moyen pour éditer et utiliser un fichier des caractéristiques du client de manière à configurer les applications de gestion et d'édition de ladite pluralité de ressources permettant de gérer les applications centrales des clients.

D'autres caractéristiques et avantages de la présente invention seront mieux compris à l'aide de la description et des figures annexées parmi lesquelles :
-- la figure 1 représente une vue en coupe schématique d'un conteneur selon un mode particulier de réalisation de l'invention ;
-- la figure 2 représente une vue schématique d'un système selon un mode particulier de réalisation de l'invention après son installation ;
-- la figure 3 représente une vue en coupe schématique d'un cadre interactif utilisée dans le système de l'invention dans un mode particulier de réalisation ;
-- la figure 4 représente un schéma bloc d'une application particulière mettant en oeuvre des éléments de l'invention ;
-- la figure 5 représente un schéma d'une autre application mettant en oeuvre des éléments de l'invention ;
-- la figure 6 représente un organigramme d'une partie du système dans un mode particulier de réalisation de l'invention.

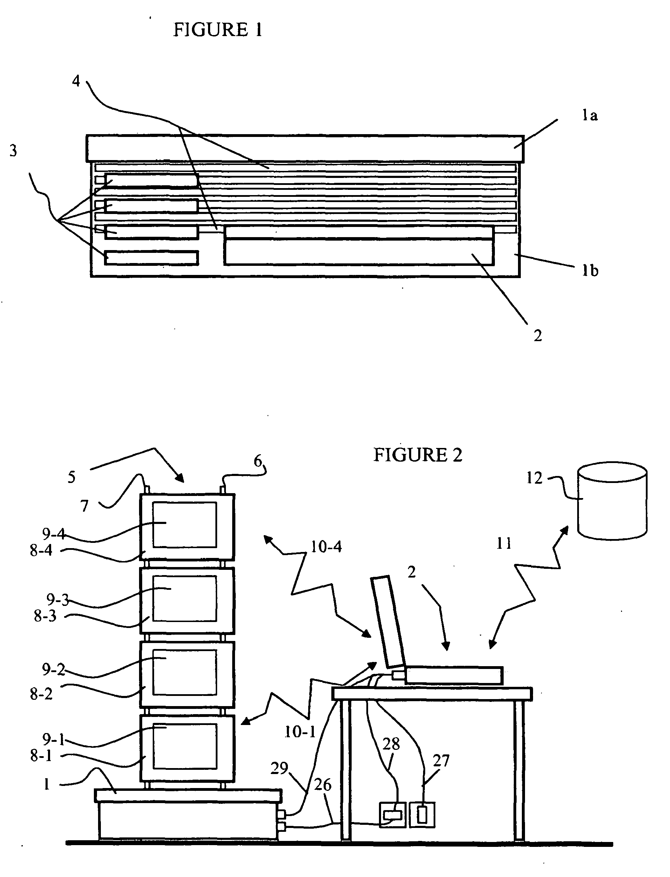

À la figure 1, on a représenté une vue en coupe schématique d'une valise ou conteneur permettant de renfermer de manière sûre l'ensemble du système de l'invention ainsi que de réaliser de manière facile un support des principaux éléments du système.

La valise est représentée par le numéro de référence 1 et comporte un couvercle 1a articulé ou monté autrement sur le corps de la valise proprement dit 1b. La valise comporte des calages ou rangements dans lesquels est disposée une pluralité de cadres interactifs 3, une pluralité de tubes de support 4, télescopiques ou insérables les uns dans les autres, et un ordinateur central, qui peut être constitué par un ordinateur portable 2.

L'ensemble constitue un système d'affichage interactif transportable et facilement transportable ainsi qu'on va le voir à l'aide de la figure 2.

À la figure 2, on a représenté le système d'affichage interactif transportable une fois monté sur un lieu, comme un lieu d'exposition.

La valise 1 sert de support. Au moins une paroi latérale de la valise porte une pluralité de logements (non représentés) dans chacun desquels est inséré l'un des tubes de support ou tiges 6 ou 7 qui servent de support aux cadres interactifs 8-1 à 8-4. Un nombre plus élevé de cadres interactifs peut bien entendu être utilisé dans le système d'affichage interactif transportable de l'invention.

Chaque cadre interactif 8-1 à 8-4 est doté de moyens d'accrochage à chacune des tiges de support 6 ou 7. Lorsque l'utilisateur désire prélever l'un des cadres, il lui suffit de manoeuvrer le moyen d'accrochage du cadre interactif choisi et de le séparer du support 5. Le support 5 est composé d'au moins deux tiges verticales 6,7 et dont la partie supérieure libre peut être réunie par une entretoise (non représentée). Dans un autre mode de réalisation, un panneau d'affichage (non représenté) permettant par exemple d'indiquer un mode d'emploi des cadres interactifs du système est fixé et peut participer à la rigidité du support 5.

À la figure 2, on a représenté un support 5 arrangé selon une seule colonne verticale. Bien entendu, l'invention est parfaitement adaptée à un support constitué de plusieurs colonnes verticales. Dans ce cas, chaque colonne de support est composée au moyen d'au moins deux tiges verticales insérées dans un logement convenable de la valise 1 servant de support, et solidarisées le cas échéant par des entretoises permettant de rigidifier le support. Dans un autre mode de réalisation, le système d'affichage interactif de l'invention peut être arrangé sur plusieurs rangées non parallèles, par exemple deux colonnes comme la colonne représentée à la figure 2, étant disposées dos à dos, la partie d'affichage 9-1 à 9-4 de chaque cadre interactif 8-1 à 8-4 restant visible sans être masquée par l'autre colonne disposée symétriquement à son envers.

L'ordinateur portable 2 a été sorti de la valise 1 et disposé sur une table pour permettre la gestion centralisée des différents cadres interactifs 8-1 à 8-4. À cet effet, l'ordinateur portable 2 est doté d'un concentrateur permettant de créer un réseau local entre l'ordinateur portable 2 proprement dit d'une part et l'ensemble des cadres interactifs 8-1 à 8-4, d'autre part. Dans un mode préféré de réalisation, le réseau local entre l'ordinateur portable 2 et les cadres interactifs 8 est réalisé sous la forme d'un réseau ad hoc selon la norme WiFi et une pluralité de liaisons 10-1 à 10-4 sont alors activés lors du démarrage du système interactif d'affichage de l'invention.

De plus, l'ordinateur portable 2 comporte une ressource de connexion 11 par un réseau de communication téléinformatique comme le réseau Internet à un serveur de bases de données 12 qui peut coopérer avec une application permettant d'administrer à distance le système interactif de visualisation d'informations selon l'invention et représenté à la figure 2.

Même si le système interactif de visualisation d'informations de l'invention comporte une batterie de sauvegarde de l'alimentation électrique, il est prévu une ressource d'alimentation qui peut être connectée par un câble 26 à une prise d'alimentation électrique murale. De même, l'ordinateur portable 2 est équipé ainsi qu'il est connu d'une ressource d'alimentation électrique connectable par un câble 28 à une prise d'alimentation électrique murale.

Même si le système interactif de visualisation d'informations de l'invention comporte des ressources de connexion à un réseau local et/ou à un réseau Internet par des moyens radio fréquence comme des ressources WiFi, il est prévu une ressource de connexion Internet sur l'ordinateur portable 2 comportant notamment un modem ADSL ou autrement qui est connecté par un câble 27 à une prise téléphonique murale permettant au système d'affichage interactif de l'invention de se connecter à distance par le réseau téléphonique. De même, l'ordinateur portable 2 peut coopérer avec une ressource non représentée de connexion à un réseau de téléphonie mobile comme le réseau GPRS ou le réseau de téléphonie mobile permettant d'échanger des messages courts SMS.

Même si le système interactif de visualisation d'informations de l'invention comporte des ressources de connexion à un réseau local constitué autour de l'ordinateur portable 2 par des moyens radio fréquence comme des ressources WiFi, il est aussi prévu une ressource de connexion, par exemple de type Ethernet, entre les différents cadres interactifs 8-1 à 8-4 et l'ordinateur portable 2. À cet effet, chaque cadre interactif et l'ordinateur portable 2 sont munis d'une carte de communication Ethernet et d'un connecteur à au moins un câble 29 de connexion Ethernet.

Dans un mode préféré de réalisation, le support 5 construit sur les tiges verticales 6 et 7, coopère aussi avec :
-- un montage d'alimentation électrique permettant de connecter chaque cadre interactif 8-1 à 8-4 à une source d'alimentation électrique contenues dans la valise 1, et
-- un montage de connexion permettant de remonter une connexion Ethernet si le système d'affichage interactif de l'invention est doté d'une ressource permettant de constituer un réseau local de type filaire Ethernet.

Chacun du montage alimentation électrique et du montage de connexion Ethernet est solidaire du support 5 et porte une prise ou connecteur, par exemple un connecteur à force d'insertion nulle, en regard de chaque prise électrique ou Ethernet solidaire du cadre interactif concerné. De la sorte, la connexion avec l'alimentation électrique et/ou avec le réseau local Ethernet est réalisée dès le montage du cadre interactif sur son support 5 et la déconnexion réalisée lorsque le cadre interactif est retiré par un utilisateur de son support 5.

À la figure 2, on a représenté aussi pour chaque cadre interactif 8-1 à 8-4 un écran d'affichage 9-1 à 9-4. L'écran d'affichage 9 de chaque cadre interactif 8 permet d'afficher une succession d'écrans générés par une application centrale exécutée ou bien sur l'ordinateur portable 2 ou bien sur le serveur distant 12. De manière à augmenter l'interactivité du système de l'invention, l'écran d'affichage peut coopérer avec des moyens de saisie de données et surtout de commande de l'utilisateur, comme des touches de déplacement de curseur, une touche de saisie de ou d'acquittement de données. Dans un mode particulier de réalisation, ces moyens de saisie de données et de commande sont intégrés dans un écran tactile.

Un utilisateur d'un cadre interactif peut alors bénéficier d'une présentation de données et de documents multimédia et interagir avec cette présentation en saisissant des données ou des commandes qui lui sont présentées par exemple de manière graphique sur l'écran 9.

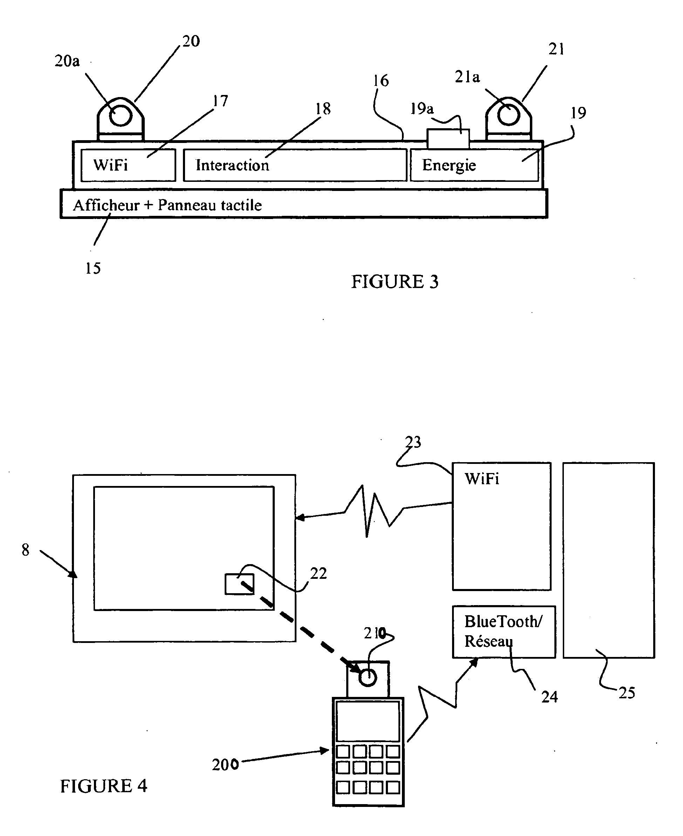

À la figure 3, on a représenté une vue en coupe schématique d'un cadre interactif 8 utilisé dans l'invention. Un tel cadre interactif existe dans le commerce par exemple sous la marque Philips (TM).

À la figure 3, le cadre interactif comporte essentiellement un afficheur 15 et un boîtier arrière contenant les différentes ressources utiles pour exécuter le système interactif de visualisation d'informations de l'invention. Le boîtier arrière comporte essentiellement une ressource 17 de connexion WiFi capable de recevoir et le cas échéant mais non préférentiellement de ré-émettre des données issues du cadre interactif ou revenant de l'ordinateur portable (2 ; figure 2) qui réalise la gestion locale des cadres interactifs dans le système d'affichage interactif de l'invention. Le boîtier arrière comporte aussi une ressource 18 de gestion de l'affichage sur l'écran 15 qui comporte au moins un processeur d'affichage et une mémoire de masse locale qui peut comporter une mémoire flash et/ou un disque dur magnétique. La mémoire de masse locale est destinée à être chargée par des données de présentation et peut être téléchargée lors de la connexion du cadre interactif 8 sur son support (5 ; figure 2). Dans ce cas, la ressource 18 de gestion de l'affichage peut aussi comporter un moyen de connexion Ethernet qui permet de connecter la mémoire de masse du cadre interactif 8 par le réseau local Ethernet à l'ordinateur portable 2 (figure 2). Dans d'autres modes de réalisation, le téléchargement d'une présentation sur le cadre interactif 8 est effectué en utilisant la ressource de connexion WiFi 17. Enfin, le boîtier arrière comporte aussi une ressource 19 de gestion de l'énergie qui comporte une batterie électrochimique non représentée et un circuit de charge qui peut être connecté à une source d'alimentation par un connecteur 19a destiné à coopérer avec un connecteur d'alimentation électrique solidaire du support 5 (figure 2) ainsi qu'il été précédemment décrit.

Dans un mode particulier de réalisation, l'écran 15 d'affichage est un écran tactile dont la gestion est aussi confiée à la ressource 18 d'interaction qui comporte alors un circuit de gestion de commandes tactiles qui permet notamment à l'application de gestion documentaire, notamment par l'utilisation du réseau local WiFi, d'interpréter les interactions entre l'utilisateur et le cadre interactif qui le porte et qu'il utilise. Les commandes de l'utilisateur peuvent être utilisées pour renseigner des données personnelles d'une part mais aussi pour activer le passage d'une vue d'un diaporama à une autre vue, si l'application de gestion documentaire à activer la diffusion d'un diaporama, d'autre part.

Préférentiellement, le cadre interactif comporte enfin des moyens d'accrochage 20, 21 qui permettent de solidariser et de désolidariser à la demande le cadre interactif du support 5 (figure 2). Dans un mode particulier de réalisation, les moyens d'accrochage comportent des équerres solidarisées sur la face arrière du boîtier arrière. Chaque équerre est munie d'un logement 20a ou 20 b qui permet d'associer chaque équerre à l'une des tiges 6, 7 (figure 2) du support 5 (figure 2) solidaires de la valise 1 (figure 2). Bien entendu, d'autres modes de réalisation de tels moyens d'accrochage sont prévus, notamment sous forme de moyens de clipage permettant d'extraire ou d'insérer simplement le cadre interactif sélectionné sur le support 5 (figure 2) par l'utilisateur.

À la figure 4, on a représenté un mode particulier de réalisation d'une application de gestion documentaire utilisant certains éléments du système interactif de visualisation d'informations de l'invention.

Une application de gestion documentaire est exécutée sur un module 25 d'exécution d'applications, qui peut être intégré à un ordinateur portable 2 (figure 2) ou à un serveur activé par Internet 12 (figure 2). Le module 25 d'exécution d'applications active, pour établir un réseau local ainsi qu'il a été déjà décrit à l'aide de la figure 2, un concentrateur WiFi 23 qui envoie des données vers un module de réception WiFi intégré au cadre interactif 8. Pour exécuter l'application de gestion documentaire, des images ou d'autres documents multimédia sont activés et affichés sur l'écran ou afficheur 15 (Figure 3) du cadre interactif 8. Le cadre interactif 8 peut, lors d'un échange interactif entre l'utilisateur et l'application de gestion documentaire, recevoir et afficher une imagette 22 comme un glyphe. L'utilisateur peut alors activer l'appareil de prise de vue 210 intégré à son téléphone mobile personnel 200ou à son assistant personnel de données (PDA). Préalablement, le téléphone mobile ou l'assistant personnel de données aura été chargé d'une application capable de capturer l'image du glyphe 22 et de l'interpréter par exemple sous forme d'un écran de données prélevé dans la présentation affichée sur le cadre interactif 8 par l'exécution de l'application de gestion documentaire.

Dans un mode de réalisation, le glyphe 22 comporte des données destinées à être mémorisées, puis visualisées par l'application téléchargée sur le téléphone mobile 200 ou l'assistant personnel de données, et exécutée à la demande par l'utilisateur sur son téléphone mobile personnel ou sur son assistant personnel de données. Ces données peuvent être compilées à partir des différentes interactions entre le cadre interactif 8, utilisé par un utilisateur donné, et par l'application de gestion documentaire exécutée à distance sur le module 25. Préférentiellement, il s'agira de données intéressant l'utilisateur et extraites de la présentation exécutée sur le cadre interactif 8.

Ces données sont alors ultérieurement utilisables sur le téléphone mobile 200de l'utilisateur par exemple à titre de mémo. Dans une application, l'application téléchargée sur le téléphone mobile 200de l'utilisateur utilise les données du glyphe pour éditer sur l'écran ou le haut-parleur du téléphone mobile 200 un formulaire de transmission ou bien par une ressource radio fréquence de type BlueTooth, reçue par un module 24 de réception radio fréquence de type BlueTooth, ou bien par une ressource de connexion au réseau de téléphonie mobile de type GSM ou SMS ou WAP. Une telle ressource 24 est implémentée sur l'ordinateur portable 2 (figure 2). Mais aussi, elle peut être implémentée sur le serveur Internet distant 12 (figure 2). Dans un ou l'autre cas, le module 25 d'exécution de l'application de gestion documentaire qui a produit le glyphe 22 comporte aussi un moyen pour interpréter les données issues du formulaire saisi et envoyé depuis le téléphone mobile 200 ou l'assistant personnel de données de l'utilisateur.

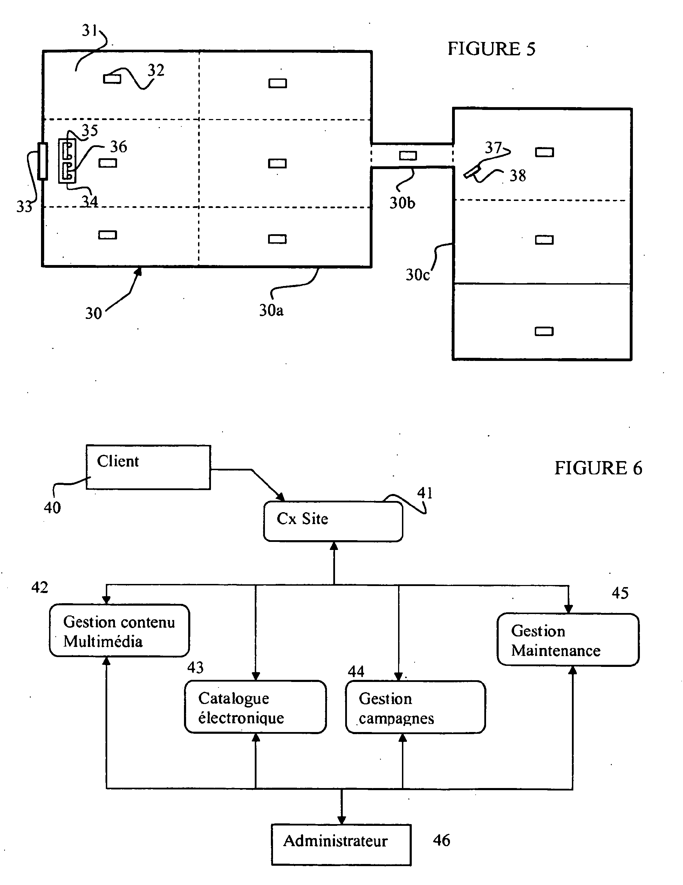

À la figure 5, on a représenté une application particulière du système interactif de visualisation d'informations selon l'invention.

Le système de l'invention est installé dans un hall d'exposition 30, composé d'une première salle 30a, qui est connectée par un couloir 30b à une seconde salle 30c. La première salle présente une porte d'entrée 33 par laquelle s'introduisent des visiteurs devant lesquels est présenté le support des cadres interactifs posés sur le support constitué par l'analyse 36 et disposé en deux colonnes 35 et 34 montées sur deux paires de tubes ainsi qu'il a déjà été expliqué ci-dessus.

La surface du hall d'exposition 30 a été divisée en une pluralité de zones matérialisées par les traits en tirets à la figure 5, dans chacune desquelles est disposé un lecteur de codes d'identification, comme le lecteur de codes d'identification 32 disposé dans la zone d'identification 31, un code d'identification étant associé à chacun des cadres interactifs initialement disposés sur le présentoir ou support 34-36.

À cet effet, chaque cadre interactif comporte un moyen pour présenter son code d'identification à tout lecteur de codes d'identification comme le lecteur 32. Dans un mode préféré de réalisation, le moyen pour présenter le code d'identification du réalisation, le moyen pour présenter le code d'identification du cadre interactif est constitué par une étiquette électromagnétique du genre RF-ID et chaque lecteur de code d'identification est constitué par un lecteur d'étiquettes RF-ID.

Dans la seconde salle 30c, on a représenté le cadre interactif 37 manipulé par un utilisateur non représenté qui se déplace dans une zone d'identification à proximité du lecteur d'étiquette RF-ID associée à ladite zone d'identification. Le cadre interactif 37 porte, par exemple sur sa face arrière, une étiquette RF-ID 38. Il en résulte que le lecteur d'étiquettes RF-ID, associé à la zone d'identification, lit le code d'identification du cadre interactif qui passe dans la zone d'identification à laquelle il est associé et produit un enregistrement indiquant l'heure de passage ainsi que le code d'identification RF-ID du cadre interactif 37.

L'ensemble des lecteurs d'étiquettes RF-ID est connecté en réseau (non représenté à la figure 5), par exemple dans un réseau sans contact de type ad hoc comme un réseau WiFi, à l'ordinateur central qui équipe le système interactif de visualisation d'information 34--36 installé à l'entrée 33 du hall d'exposition. Il est ainsi possible pour l'exploitant du hall d'exposition d'une part de réaliser le traçage des activités de l'utilisateur qui se déplace dans le hall d'exposition et d'autre part de détecter le moment où le cadre interactif sort des zones d'identification permises de façon par exemple à déclencher une alarme à l'aide d'un moyen d'alarme activé lorsque aucun lecteur d'étiquette RF-ID ne détecte le code d'identification d'un cadre interactif donné.

Selon un mode de réalisation de l'invention, le système comporte ainsi un moyen générateur de fichiers de traces des utilisations de chaque cadre interactif et peut aussi collecter lors des diverses interactions entre le cadre interactif et l'utilisateur les différentes opérations ou commandes exécutées par ledit utilisateur en relation avec la localisation dans la zone d'identification dans laquelle se trouve l'utilisateur.

Selon un mode de réalisation de l'invention, le système comporte ainsi un moyen générateur d'alarmes pour indiquer une situation dans laquelle l'utilisateur du cadre interactif sort d'une zone d'identification permise.

À la figure 6, on a représenté un organigramme d'une partie du système dans un mode particulier de réalisation de l'invention.

À la partie du système interactif de visualisation d'information qui a été représenté à la figure 6 comporte principalement un client 40 qui est constitué par au moins un système interactif de visualisation d'information tels que décrits précédemment, et qui dispose d'une connexion par un réseau téléinformatique de type WAN comme un réseau Internet pour se connecter à un site Internet 41 de présentation d'un ensemble de ressources permettant de gérer au moins une application centrale ou bien exécutée directement sur l'ordinateur embarqué dans le système interactif de visualisation d'information du client 40 ou bien exécutée à distance sur le serveur du site 41 pour le compte du client 40.

À cette fin, il est prévu un administrateur 46 qui maintient une pluralité de ressources permettant de gérer ladite application centrale. La pluralité de ressources permettant de gérer ladite application centrale est composée notamment :
-- d'une application de gestion des contenus multimédias 42 associés au client 40 ;
-- d'une application d'édition et de consultation d'un catalogue électronique 43 ;
-- d'une application de gestion de campagnes 44 ; et/ou
-- d'une application de gestion de la maintenance 45 des divers systèmes interactifs de visualisation d'informations associées au client 40.
serveur d'applications constitué autour de l'administrateur 46. L'interface de reconnaissance comporte un moyen de saisie, d'envoi et de reconnaissance d'un code utilisateur et d'un mot de passe. Lorsque l'interface de reconnaissance a reconnu un client autorisé, un fichier des caractéristiques du client 40 est chargé de manière à configurer les quatre applications de gestion et d'édition 42-45 de ladite pluralité de ressources permettant de gérer les applications centrales des clients 40.

Dans un mode de réalisation, le cadre interactif est constitué par un ordinateur du genre "Tablet PC (TM)".

Dans un mode de réalisation non représenté aux figures, le support est composé de deux tiges verticales de support comme les tiges verticales du mode de réalisation de la figure 1. Les tiges de support sont réunies près de leurs extrémités supérieure et inférieure par des entretoises de sorte que l'ensemble des deux tiges verticales et des deux entretoises d'extrémité se trouve dans un plan rigide.

De plus, la base de chacune des deux tiges verticales, en dessous de l'entretoise inférieure précitée, est insérée dans un gousset de forme triangulaire qui se situe dans le plan vertical perpendiculaire au plan vertical occupé par les deux tiges verticales et leurs deux entretoises. Les deux goussets sont dotés de moyens de solidarisation au support constitué par la valise qui a déjà été décrite à la figure 1.

Pour réaliser la solidarisation des entretoises aux deux tiges verticales, chaque tige verticale étant réalisée sous la forme d'un profilé de section sensiblement rectangulaire, comporte un décrochement sur les bords duquel est destiné à venir s'insérer l'extrémité correspondante de l'entretoise. Chaque extrémité de l'entretoise, qui en comporte deux, est configurée sous la forme de deux ergots dont l'un sert à rigidifier l'assemblage et l'autre est en forme de clé qui peut être manoeuvré à l'aide d'un outil qui mobilise une partie réceptrice d'outil solidaire de l'ergot en forme de clé. Lorsque l'extrémité de l'entretoise a été insérée au montage dans le décrochement correspondant de la tige verticale, le monteur utilise l'outil pour faire tourner la partie réceptrice d'outil sur l'entretoise de sorte que l'ergot en forme de clé est déplacé pour verrouiller l'entretoise dans le décrochement de la tige verticale.

Du fait que le décrochement prend la forme d'une rainure qui court tout le long de la tige verticale, il est possible de placer chaque entretoise à une hauteur libre.

Dans un exemple de réalisation, le quadrilatère ainsi formé des deux tiges verticales et des deux entretoises présente une largeur de 900 millimètres et une hauteur de 2000 millimètres.

Dans un mode de réalisation, le long de chaque tige verticale entre les deux entretoises précitées, chaque tige verticale étant constituée par un profilé de section sensiblement rectangulaire, est disposé une partie de support, elle-même constituée par des profilés de même genre que celui des tiges verticales. Par l'assemblage des profilé de la partie de support, il est constitué symétriquement de part de d'autre de la tige verticale sur laquelle elle est fixée deux « colonnes » de quatre « rangées » dont les dimensions sont telles que chaque « cellule » ainsi aménagée peut recevoir un cadre interactif ou un ordinateur de genre Tablet PC (TM).

Le support de ce mode de réalisation de l'invention comporte ainsi deux parties de support permettant de réaliser un mur d'images de deux fois huit logements pour recevoir chacun, et de manière amovible ainsi qu'il a déjà été décrit un cadre interactif déjà décrit.

Dans ce but, chaque partie de support comporte deux profilés verticaux parallèles et disposés de part et d'autre de la tige centrale et dans le plan vertical occupé par les deux tiges verticales et leurs entretoises précitées, qui sont réunis par cinq paires de profilés horizontaux de façon à former de manière rigide de chaque côté de la tige rigide. Dans un mode de réalisation, les extrémités de chaque profilé horizontal sont conformées avec le système de deux ergots déjà décrit pour les entretoises. Il est ainsi possible de réaliser de manière rigide avec un montage facile avec un seul outil de montage un mur d'images de deux fois huit cadres interactifs.

On va maintenant décrire un mode de réalisation d'un moyen d'accrochage d'un cadre interactif comme un ordinateur de genre « Tablet PC » (TM) dans un logement des parties d'accrochage décrites ci-dessus.

Chaque logement présente un profilé horizontal supérieur et un profilé horizontal inférieure. Sauf pour les logements les plus en hauts ou les plus en bas, un profilé horizontal supérieur d'un logement est aussi le profilé horizontal supérieur du logement immédiatement supérieur. Il porte sur sa partie centrale et dirigée vers le bas une plaquette destinée à venir bloquer le haut du cadre interactif lorsqu'il sera inséré dans son logement. Cette plaquette est conformée de façon à s'adapter aux épaisseurs relatives des profilés horizontaux et du cadre interactif supporté dans le mur d'images.

De plus, chaque profilé horizontal inférieur porte sur chacune de ses extrémités latérales, vers l'intérieur du logement, un bloc qui porte un système de fixation amovible du cadre interactif destiné à venir équiper le logement. Le bloc est équipé à une de ses extrémités par le même système de deux ergots avec une partie réceptrice d'outil pour venir se solidariser avec une rainure correspondante réalisée sur une face convenable du profilé horizontal. Le système de fixation amovible peut comporter au moins un bras horizontal de support de la base du cadre interactif avec un crochet permettant de retenir la base du cadre interactif dans son logement. Le bras peut alors être mobile et rappelé par un ressort.

## Revendications

1. Système interactif de visualisation d'informations, comportant:
-- un ordinateur embarqué (2) doté de ressources de connexion à un réseau local (10) et de ressources de connexion à un réseau externe (11);
-- une valise (1) permettant de renfermer de manière sûre avant son montage l'ensemble des composants du système interactif ;
**caractérisé en ce qu'**il comporte aussi :
-- une pluralité de cadres interactifs (8) de support d'informations, chacun d'eux étant doté d'au moins une ressource de connexion (17) au réseau local (10) instauré à l'aide de l'ordinateur embarqué ;
-- une structure mécanique (5-7) de montage et de support destinée à supporter et à disposer la pluralité de cadres interactifs une fois montée; et
-- ladite valise (1) comportant un moyen de support physique à ladite structure mécanique (5-7) une fois montée ;
-- ladite structure mécanique comportant une pluralité de tubes (4) pour constituer par emboîtage ou de manière télescopique des colonnes de support (5) ; et
-- chaque cadre interactif de ladite pluralité de cadres interactifs (8) étant équipé de moyens d'accrochage et de décrochage (20, 21) aux dites colonnes de support (5).

2. Système selon la revendication 1, **caractérisé en ce que** la valise comporte :
-- des rangements ou calages pour enfermer de manière sûre la pluralité de cadres interactifs (3), et l'ordinateur embarqué (2) ainsi que
-- des logements à titre de moyen de support physique à ladite structure mécanique (5-7) une fois montée pour recevoir et maintenir rigidement lesdits tubes lorsqu'ils sont associés en colonnes de support (5) sur ladite valise.

3. Système selon la revendication 2, **caractérisé en ce qu'**au moins une colonne de support est terminée à son extrémité opposée à l'extrémité engagée dans les logements de support de la valise par une entretoise pour assurer sa rigidité mécanique.

4. Système selon l'une quelconque des revendications précédentes, **caractérisé en ce qu'**il comporte une connexion de type téléinformatique à un serveur de bases de données (12) distant.

5. Système selon l'une quelconque des revendications précédentes, **caractérisé en ce qu'**il comporte un concentrateur WiFi ou du même genre la associé à au moins l'ordinateur embarqué (2) associé à la valise, et **en ce que** chaque cadre interactif (8) comporte une ressource de connexion WiFi ou du même genre pour échanger des données et/ou des commandes avec une application centrale exécutée sur ledit ordinateur embarqué (2) et/ou sur un site serveur de bases de données (12) distant.

6. Système selon la revendication 1, **caractérisé en ce que** chaque colonne de support (5) comporte des moyens de connexion d'alimentation électrique des cadres interactifs connectés à une source d'alimentation électrique, notamment pour recharger des batteries électrochimiques des cadres interactifs, et/ou des moyens de connexion électrique de signaux numériques provenant d'un réseau local filaire implémenté avec ledit ordinateur embarqué (2) de manière à charger des présentations et/ou des applications de documents multimédias sur chaque cadre interactif connecté audit support.

7. Système selon la revendication 6, **caractérisé en ce que** chaque cadre interactif comporte un afficheur qui coopère avec des moyens de saisie de données et/ou de commande comme un écran tactile, interprétées dans l'exécution d'au moins une présentation et/ou application de documents multimédias.

8. Système selon l'une quelconque des revendications précédentes, **caractérisé en ce qu'**il comporte un moyen pour générer une imagette (22) contenant des données et/ou des codes exécutables, l'imagette (22) étant affichée sur au moins un cadre interactif (8), un moyen pour télécharger une application de capture de ladite imagette (22) par un téléphone mobile (200) ou un assistant personnel de données de manière à utiliser des données et/ou des codes compilés par ladite application de gestion documentaire exécutée sur ledit cadre interactif (8) en fonction des interactions de l'utilisateur.

9. Système selon la revendication 8 ou selon la revendication 6, **caractérisé en ce qu'**il comporte sur au moins un cadre interactif (8) une ressource pour retourner des données et /ou des commandes issues de l'exécution d'une application de gestion documentaire exécutée sur ledit cadre interactif (8) en fonction des interactions de l'utilisateur par une connexion comme une connexion BlueTooth (24) avec un module d'exécution de l'application de gestion documentaire exécutée sur l'ordinateur embarqué (2).

10. Système selon l'une quelconque des revendications précédentes, **caractérisé en ce qu'**il est associé avec un réseau de lecteurs de codes d'identification de cadres interactifs, chaque lecteur (32) de codes d'identification étant associé à la reconnaissance d'une zone (31) d'identification, et **en ce qu'**il comporte un moyen pour réaliser le traçage des activités de l'utilisateur d'un cadre interactif porteur d'un code d'identification reconnaissable par les dits lecteurs de codes d'identification, et un moyen pour détecter le moment où le cadre interactif sort des zones d'identification permises qui coopère avec un moyen d'alarme activé lorsque aucun lecteur d'étiquette RF-ID ne détecte le code d'identification d'un cadre interactif donné.

11. Système selon la revendication 10, **caractérisé en ce qu'**il comporte un moyen générateur de fichiers de traces des utilisations de chaque cadre interactif pour collecter lors des diverses interactions entre le cadre interactif et l'utilisateur les différentes opérations ou commandes exécutées par ledit utilisateur en relation avec la localisation dans la zone d'identification dans laquelle se trouve l'utilisateur.

12. Système selon la revendication 10, **caractérisé en ce qu'**il comporte un moyen générateur d'alarmes pour indiquer une situation dans laquelle l'utilisateur du cadre interactif sort d'une zone d'identification permise.

13. Système selon l'une quelconque des revendications 10 à 12, **caractérisé en ce que** les moyens d'identification sont de type RF-ID.

14. Système selon l'une quelconque des revendications précédentes, **caractérisé en ce qu'**il comporte une pluralité de clients (45), un réseau téléinformatique de type WAN comme un réseau Internet, au moins un site Internet (41) de présentation d'un ensemble de ressources permettant de gérer au moins une application centrale ou bien exécutée directement sur l'ordinateur embarqué dans le système interactif de visualisation d'informations du client 40 ou bien exécutée à distance sur le serveur du site (41) pour le compte du client (40).

15. Système selon la revendication 14, **caractérisé en ce qu'**il coopère avec un administrateur (46) qui maintient une pluralité de ressources permettant de gérer ladite application centrale et comportant:
-- une application de gestion des contenus multimédias (42) associés au client (40) ; et/ou
-- d'une application d'édition et de consultation d'un catalogue électronique (43) ; et/ou
-- d'une application de gestion de campagnes (44) ; et/ou
-- d'une application de gestion de la maintenance (45) des divers systèmes interactifs de visualisation d'informations associées au client (40).

16. Système selon la revendication 15, **caractérisé en ce que** le site de connexion (41) comporte une interface de reconnaissance des différents clients (40) abonnés au site central serveur d'applications qui comporte un moyen de saisie, d'envoi et de reconnaissance d'un code utilisateur et d'un mot de passe, et un moyen pour éditer et utiliser un fichier des caractéristiques du client (40) de manière à configurer les applications de gestion et d'édition (42-45) de ladite pluralité de ressources permettant de gérer les applications centrales des clients (40).

## Claims

1. Interactive system for viewing information, including:
-- an embedded computer (2) with the resources to connect to a local network (10) and the resources to connect to an external network (11);
-- a case (1) to securely enclose all the components of the interactive system prior to assembly;
**characterized in that** it also includes:
-- a plurality of interactive frames (8) for information media, each with at least one resource (17) for connecting to the local network (10) established using the embedded computer;
-- a mechanical assembly and support structure (5-7) intended to support and organize the plurality of interactive frames once assembled; and
-- said case (1) including means for physically supporting the mechanical structure (5-7) once assembled;
-- said mechanical structure including a plurality of tubes (4) to form support columns (5) by stacking or telescopically; and
-- each interactive frame in said plurality of interactive frames (8) being equipped with means for hooking and unhooking (20, 21) to said support columns (5).

2. System according to claim 1, **characterized in that** the case:
-- storage spaces or clamps to securely hold the plurality of interactive frames (3), and the embedded computer (2), as well as
-- housings to physically support said mechanical structure (5-7) once assembled, to receive and rigidly hold said tubes when they are assembled as support columns (5) on said case.

3. System according to claim 2, **characterized in that** at least one support column ends in a brace to ensure its mechanical rigidity, at the end opposite to the end placed in the case support housings.

4. System according to any of the preceding claims, **characterized in that** it includes a remote data connection to a remote database server (12).

5. System according to any of the preceding claims, **characterized in that** it includes a WiFi hub or similar linked to at least the embedded computer (2) associated with the case, and **in that** each interactive frame (8) has a WiFi connection resource or similar to exchange data and/or commands with a central application executed on said embedded computer (2) and/or on a remote database server site (12).

6. System according to claim 1, **characterized in that** each support column (5) includes means for connecting the interactive frames to the power supply, in particular to recharge the interactive frames' electrochemical batteries, and/or means for power connection using digital signals from a local wired network implemented using said embedded computer (2) in such a way that multimedia document presentations and/or applications can be loaded onto each interactive frame connected to said support.

7. System according to claim 6, **characterized in that** each interactive frame includes a display which cooperates with means for data entry and/or commands such as a touch screen, interpreted during the execution of at least one multimedia document presentation and/or application.

8. System according to any of the preceding claims, **characterized in that** it includes means for generating a thumbnail image (22) containing executable codes and/or data, the thumbnail image (22) being displayed on at least one interactive frame (8), means for downloading an application for capturing said thumbnail image (22) using a mobile telephone (200) or a personal data assistant, in such a way that data and/or codes compiled by said document management application executed on said interactive frame (8) can be used according to the user's interactions.

9. System according to claim 8 or claim 6, **characterized in that** on at least one interactive frame (8) it includes a resource for returning data and/or commands that result from running the document management application executed on said interactive frame (8) according to the user's interactions via a connection such as a BlueTooth (24) connection with a module for running the document management application executed on the embedded computer (2).

10. System according to any of the preceding claims, **characterized in that** it is linked to a network of readers of the interactive frames' identification codes, with each reader (32) of the identification codes being linked to recognition of an identification zone (31), and **in that** it includes means for logging the activities of users of interactive screens with an identification code recognizable by said identification code readers, and means for detecting when the interactive screen leaves the permitted identification zones that cooperates with an alarm activated when no RF-ID label reader can detect the identification code of a given interactive frame.

11. System according to claim 10, **characterized in that** it includes means for generating log files of how each interactive frame is used, logging, during the various interactions between the interactive frame and the user, the various operations and commands carried out by that user in relation to the location within the identification zone in which the user is positioned.

12. System according to claim 10, **characterized in that** it includes means for generating alarms to indicate when the user of an interactive frame leaves a permitted identification zone.

13. System according to claims 10 to 12, **characterized in that** the identification means are RF-ID or similar.

14. System according to any of the preceding claims, **characterized in that** it includes a number of clients (45), a WAN remote data network or similar as an internet network, at least one website (41) for presenting a plurality of resources for managing at least one central application, or executed directly on the embedded computer in the client's interactive information viewing system (40) or executed remotely on the site's server (41) on behalf of the client (40).

15. System according to claim 14, **characterized in that** it cooperates with an administrator (46) which maintains a plurality of resources to manage said central application, including:
-- a multimedia content management application (42) linked to the client (40); and/or
-- an application for publishing and viewing an electronic catalogue (43); and/or
-- a campaign management application (44); and/or
-- an application for managing the maintenance (45) of the various interactive information viewing systems linked to the client (40).

16. System according to claim 15, **characterized in that** the connection site (41) includes an interface for recognizing the various clients (40) who subscribe to the central application server site, including a method for entering, sending and recognizing a user code and password, and means for editing and using a client characteristics file (40) so as to configure the applications (42-45) for managing and editing said plurality of resources for managing clients' central applications (40).

## Patentansprüche

1. Interaktives Informationsvisualisierungssystem mit folgenden Komponenten:
-- ein eingebetteter Computer (2) mit Ressourcen für die Verbindung zu einem lokalen Netzwerk (10) und einem externen Netzwerk (11);
-- ein Koffer (1) zum sicheren Verstauen aller Komponenten des interaktiven Systems vor seiner Montage;
**dadurch gekennzeichnet, dass** auch folgende Komponenten vorgesehen sind:
-- eine Vielzahl an interaktiven Rahmen (8) als Informationsträger, von denen jeder mit mindestens einer Ressource für die Verbindung (17) zu einem lokalen Netzwerk (10) ausgestattet ist, die mit Hilfe des eingebetteten Computers hergestellt wird;
-- eine mechanische Montage- und Trägerstruktur (5-7) zum Stützen und Bereitstellen der verschiedenen interaktiven Rahmen nach ihrer Montage; und
-- der oben genannte Koffer (1) mit einer physischen Trägervorrichtung für die genannte mechanische Struktur (5-7) nach ihrer Montage;
-- die genannte mechanische Struktur mit einer Vielzahl an Rohren (4), die ineinandergefügt werden oder teleskopisch verstellbar sind, um Ständersäulen (5) zu bilden; und
-- jeder interaktive Rahmen (8) verfügt über Befestigungs- und Trennvorrichtungen (20, 21) für die genannten Ständersäulen (5).

2. System nach Anspruch 1, **dadurch gekennzeichnet, dass** der Koffer Folgendes umfasst:
-- Ablage- und Klemmvorrichtungen zum sicheren Verstauen der interaktiven Rahmen (8) und des eingebetteten Computers (2) sowie
-- Gehäuse als physische Trägervorrichtung für die genannte mechanische Struktur (5-7) nach ihrer Montage zum Aufnehmen und stabilen Abstützen der genannten Rohre, wenn diese als Ständersäulen (5) auf dem genannten Koffer montiert sind.

3. System nach Anspruch 2, **dadurch gekennzeichnet, dass** mindestens eine Ständersäule an dem Ende, das dem in das Stützgehäuse des Koffers montierten Ende gegenüberliegt, über einen Querriegel verfügt, um ihre mechanische Festigkeit sicherzustellen.

4. System nach einem der obenstehenden Ansprüche, **dadurch gekennzeichnet, dass** es über eine teleinformatische Verbindung zu einem Remote-Datenbankserver (12) verfügt.

5. System nach einem der obenstehenden Ansprüche, **dadurch gekennzeichnet, dass** es über einen kabellosen oder einen ähnlichen Konzentrator verfügt, der mindestens mit dem im Koffer integrierten eingebetteten Computer (2) verbunden ist, und dass jeder interaktive Rahmen (8) über eine kabellose oder eine ähnliche Verbindungsressource verfügt, um die Daten und/ oder Befehle mit einer zentralen Anwendung auszutauschen, die auf dem eingebetteten Computer (2) und/ oder über einen Remote-Datenbankserver (12) ausgeführt wird.

6. System nach Anspruch 1, **dadurch gekennzeichnet, dass** jede Ständersäule (5) über Vorrichtungen zur Stromversorgung der an eine elektrische Stromquelle angeschlossenen interaktiven Rahmen verfügt, insbesondere zum Auswechseln der elektrochemischen Batterien der interaktiven Rahmen, und/ oder über Vorrichtungen zur elektrischen Verbindung digitaler Signale, die von einem verkabelten lokalen Netzwerk gesendet werden, das in den eingebetteten Computer (2) implementiert ist, so dass Präsentationen und/ oder Anwendungen von Multimediadateien in jedem interaktiven Rahmen, der an die genannte Trägervorrichtung angeschlossen ist, geladen werden können.

7. System nach Anspruch 6, **dadurch gekennzeichnet, dass** jeder interaktive Rahmen über eine Anzeige verfügt, die mit den Vorrichtungen zur Eingabe von Daten oder Befehlen, die bei der Ausführung mindestens einer Präsentation und/ oder Anwendung von Multimediadokumenten interpretiert werden, wie ein Touchscreen verbunden ist

8. System nach einem der obenstehenden Ansprüche, **dadurch gekennzeichnet, dass** es über eine Vorrichtung zur Erstellung eines Miniaturbildes (22) verfügt, das die ausführbaren Daten und/ oder Codes enthält und auf mindestens einem interaktiven Rahmen (8) angezeigt wird, sowie über eine Vorrichtung zum Laden einer Anwendung zur Erfassung dieses Miniaturbildes (22) über ein Mobiltelefon (200) oder einen persönlichen Datenassistenten, damit die durch diese im interaktiven Rahmen (8) ausgeführte Dokumentenmanagement-Anwendung kompilierten Daten und/ oder Codes je nach Interaktion des Benutzers verwendet werden können.

9. System nach Anspruch 8 oder 6, **dadurch gekennzeichnet, dass** es über mindestens einen interaktiven Rahmen (8), eine Vorrichtung zum Zurücksenden der Daten und/oder Befehle, die aus der Ausführung einer Dokumentenmanagement-Anwendung in diesem interaktiven Rahmen (8) je nach Interaktionen des Benutzers über eine Verbindung wie zum Beispiel BlueTooth (24) mit einem Modul zur Ausführung der Dokumentenmanagement-Anwendung auf dem eingebetteten Computer (2) hervorgegangen sind.

10. System nach einem der obenstehenden Ansprüche, **dadurch gekennzeichnet, dass** es mit einem Netzwerk aus Vorrichtungen zum Lesen von Identifikationscodes der interaktiven Rahmen verbunden ist ; dabei ist jede Vorrichtung zum Lesen (32) von Identifikationscodes mit der Erkennung eines Identifikationsbereichs (31) verknüpft; dass es über eine Vorrichtung verfügt, mit der die Aktivitäten des Benutzers eines interaktiven Rahmens, der einen von diesen Lesevorrichtungen erkennbaren Identifikationscode trägt, verfolgt werden können, und dass es über eine Vorrichtung verfügt, mit welcher der Zeitpunkt erkannt wird, an dem der interaktive Rahmen außerhalb der zulässigen Identifikationsbereiche liegt, und die mit einem Alarmsystem zusammenwirkt, das aktiviert wird, wenn kein RFID-Lesegerät den Identifikationscode eines bestimmten interaktiven Rahmens erkennen kann.

11. System nach Anspruch 10, **dadurch gekennzeichnet, dass** es über eine Vorrichtung zur Erstellung von Tracker-Dateien über die Benutzung jedes interaktiven Rahmens verfügt, um während der Interaktionen zwischen dem interaktiven Rahmen und dem Benutzer die verschiedenen von ihm ausgeführten Arbeitsgänge oder Befehle innerhalb des Identifikationsbereichs des Benutzers zu erfassen.

12. System nach Anspruch 10, **dadurch gekennzeichnet, dass** es über eine Alarmvorrichtung verfügt, die in den Situationen aktiviert wird, in denen sich der Benutzer des interaktiven Rahmens außerhalb des zulässigen Identifikationsbereichs befindet.

13. System nach einem der Ansprüche 10 bis 12, **dadurch gekennzeichnet, dass** es mit RFID-Identifikationsvorrichtungen ausgestattet ist.

14. System nach einem der obenstehenden Ansprüche, **dadurch gekennzeichnet, dass** es über eine Gesamtheit an Clients (45), ein teleinformatisches WAN-Netzwerk wie z. B. Internet, und mindestens eine Internetseite (41) zur Präsentation einer Gesamtheit an Ressourcen verfügt, mit denen mindestens eine Anwendung verwaltet werden kann, die zentral, direkt auf dem im interaktiven Informationsvisualisierungssystem des Clients (40) integrierten eingebetteten Computer oder über den Server der Internetseite (41) für das Client-Konto (40) ausgeführt wird.

15. System nach Anspruch 14, **dadurch gekennzeichnet, dass** er mit einem für mehrere Ressourcen zuständigen Administrator (46) kooperiert, mit dem die zentrale Anwendung verwaltet wird, und das Folgendes umfasst:
-- eine Anwendung zur Verwaltung mit dem Kunden (40) verbundener multimedialer Inhalte (42); und/ oder
-- eine Anwendung zur Bearbeitung und Einsicht eines elektronischen Katalogs (43); und/ oder
-- eine Anwendung zur Kampagnenverwaltung (44); und/oder
-- eine Anwendung zur Verwaltung der Instandhaltung (45) der verschiedenen mit dem Client (40) verbundenen interaktiven Informationsvisualisierungssysteme.

16. System nach Anspruch 15, **dadurch gekennzeichnet, dass** die Verbindungsstelle (41) eine Oberfläche zur Erkennung der verschiedenen Clients (40) umfasst, die an dem zentralen Anwendungsserver-Standort teilnehmen, der über eine Eingabe-, Sende- und Erkennungsvorrichtung für Benutzercodes und Passwörter verfügt, und über eine Vorrichtung zur Bearbeitung und Verwendung einer Datei mit den Merkmalen des Clients (40), damit die Anwendungen zur Verwaltung und Bearbeitung (42-45) der verschiedenen Ressourcen konfiguriert und die zentralen Anwendungen der Clients (40) gesteuert werden können.
